# EUROPEAN PATENT APPLICATION

(11) **EP 2 075 502 A2**
(43) Date of publication of application: **01.07.2009**
(21) Application number: 08254116.0
(22) Date of filing: 23.12.2008
(51) Int. Cl.: F21V 8/00

(54) **Illumination device and car with same**

(30) Priority: 27.12.2007 CN 200710203460
(71) Applicant: Foxsemicon Integrated Technology, Inc., Taiwan 350 (CN)
(72) Inventor: Lin, Mei-Chun, Miao-Li Hsien Taiwan 350 (CN); Fang, Jui-Wen, Miao-Li Hsien, Taiwan 350 (CN); Yang, Hung-Chih, Miao-Li Hsien Taiwan 350 (CN); Hsieh, Shu-Hui, Miao-Li Hsien Taiwan 350 (CN); Lai, Chih-Ming, Miao-Li Hsien Taiwan 350 (CN)
(74) Representative: Stuttard, Garry Philip

(57) **Abstract**

An illumination device includes a light emitting module (20) and a mounting housing (10) for receiving the light emitting module therein. The light emitting module includes a light guide plate (21) and a light source (23) optically coupled to the light guide plate. The mounting housing includes a top plate (12), a mounting plate (14) and a side plate (16) interconnected between the top plate and the mounting plate. A receiving space (15) is cooperatively formed by the top plate, the mounting plate and the side plate of the mounting housing for receiving the light guide plate therein. A gap (120) is defined in the top plate above the light emitting module. An opening (160) is defined in one end of the side plate for allowing the light emitting module to insert into the receiving space.

## Description

The present invention generally relates to illumination devices, particularly to a illumination device used for a car.

Illumination devices with Light emitting diodes (LEDs) as a light source typically include a lamp cover, LEDs, and a lamp holder. The LEDs are located inside the lamp cover and has two electrodes extending out of a head of the lamp cover with attached led wires. The lamp cover head is then placed in a machine for injection, forming a lamp holder within which the lamp cover head and the led wires are tightly enclosed. Manufacturing an illumination device with the LED light sources in this manner is relatively difficult and complicated. Additionally, if the LED or the lamp cover breaks, a tool is generally required to open the lamp holder to replace the broken part. The lamp holder must then be injected again. Therefore, waste is unavoidable as the illumination device is difficult to detach and accordingly the cost is high.

Therefore, there is a need for providing an illumination device which can overcome the above-mentioned problems.

The present invention relates to an illumination device. According to a preferred embodiment of the present invention, the illumination device includes a light emitting module and a mounting housing. The light emitting module includes a light guide plate. The light guide plate has a light exit surface and a light source optically coupled to the light guide plate. The mounting housing includes a top plate, a mounting plate opposite to the top plate and a peripheral side plate interconnected between the top plate and the mounting plate. The top plate, the mounting plate and the side plate cooperatively defines a receiving space for receiving the light emitting module therein. A gap is defined in the top plate above the light emitting module. An opening is defined in one end of the side plate for allowing the light emitting module to insert into the receiving space.

Other advantages and novel features of the present illumination device will become more apparent from the following detailed description of preferred embodiments when taken in conjunction with the accompanying drawings, in which:

FIG. 1 an assembled, isometric view of an illumination device, according to a preferred embodiment of the present invention;

FIG. 2 is an exploded, isometric view of the illumination device of FIG. 1;

FIG. 3 is a cross-sectional view of the illumination device of FIG. 1, taken along line III-III thereof;

FIG. 4 is a semi-assembled, isometric view of the illumination device of FIG. 1;

FIG. 5 is schematic view showing a car with the illumination device of FIG. 1 according to an exemplary embodiment; and

FIG. 6 is a circuit diagram applied in the illumination device of FIG. 1.

Reference will now be made to the drawing figures to describe the various present embodiments in detail.

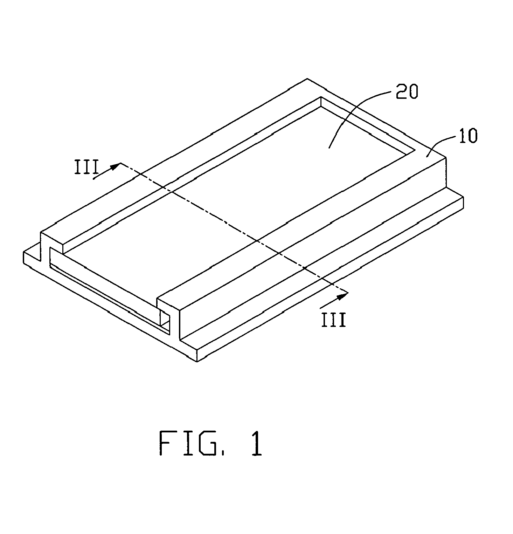

Referring to FIG 1, an illumination device according to a preferred embodiment is provided. The illumination device includes a light emitting module 20 and a mounting housing 10 for mounting the light emitting module 20 thereon.

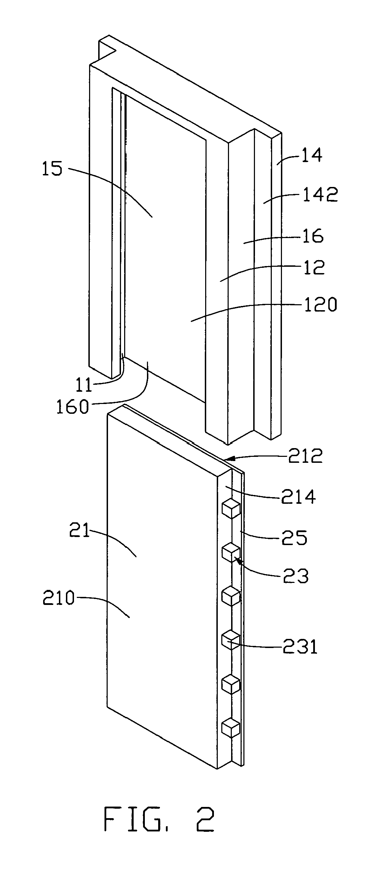

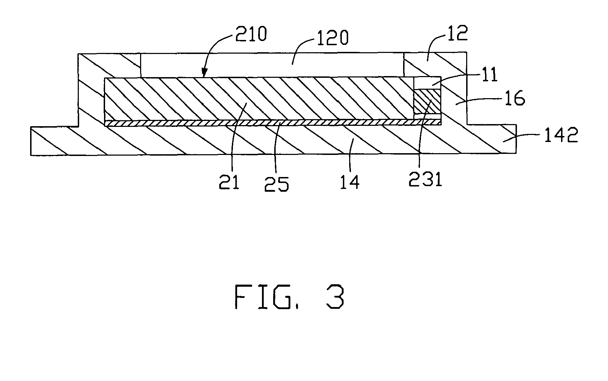

Referring to FIGS. 2 and 3, the mounting housing 10 includes a top plate 12, a mounting plate 14 and a peripheral side plate 16. The top plate 12 is arranged at a top portion of the mounting housing 10, whilst the mounting plate 14 parallels to the top plate 12 and is arranged at a bottom portion of the mounting housing 10, and the side plate 16 interconnects the top plate 12 with the mounting plate 14. The top plate 12, the mounting plate 14 and the side plate 16 cooperatively define a receiving space 15 for receiving the light emitting module 20 therein. A middle portion of the top plate 12 is cut away, whereby a gap 120 is defined in the middle portion of the top plate 12 above the light emitting module 20. An opening 160 is defined in one end of the side plate 16 and is oriented perpendicular to the gap 120 of the top plate 12. Two slots 11 are defined at two opposite lateral sides of the mounting housing 10 between the top plate 12 and the mounting plate 14. The guiding channel 11 extends along a lengthwise direction of the top plate 12 and communicates with an external environment of the mounting housing 10 through the opening 160 of the side plate 16. A size of the mounting plate 14 is lager than that of the top plate 12. A left side edge and a right side edge of the mounting plate 14 extend laterally outwardly and protrude out of the left side and the right side of the side plate 16 respectively, thus to form two elongated flanges 142 located at the left side and the right side of the illumination device respectively.

The light emitting module 20 includes a light guide plate 21, a light source 23 including a plurality of white light emitting diodes (LEDs) 231, and a reflecting plate 25. The light guide plate 21 can be made of flexible and transparent materials including polymethylmethacrylate (PMMA), polycarbonate (PC), silicone, polyacrylate, epoxy, glass and etc. A refractive index of the light guide plate 21 is in the range from 1.4 to 1.65. The light guide plate 21 includes a substantially rectangular light exit surface 210, a bottom surface 212 opposite to the light exit surface 210, and a plurality of side surfaces 214 located between the light exit surface 210 and the bottom surface 212. The light exit surface 210 of the light guide plate 21 is preferably a rough surface so that light incident towards the light exit surface 210 can uniformly be distributed. In this embodiment, the light exit surface 210 has a plurality of micro-protruding dots formed thereon. A diameter of each of the micro-protruding dots is either equal to or less than 5 millimeter. Alternatively, the light exit surface 210 can also include a plurality of micro-recesses formed thereon. The micro-protruding dots or micro-recesses can be distributed over the entire light exit surface 210 or distributed on particular regions of the light exit surface 210.

The white LEDs 231 are optically coupled with the light guide plate 21. The white LEDs 231 are disposed at a right side surface 214 of the light guide plate 21 and are arranged along a longitudinal direction of the right side surface 214. Therefore, a linear light source is formed by the linearly arrayed white LEDs 231 on the right side surface 214 of the light guide plate 21, and the right side surface 214 of the light guide plate 21 functions as a light incident surface of the light guide plate 21. The lights emitted from the white LEDs 231 are incident into an interior of the light guide plate 21 from the right side surface 214, and are guided to spread out of the light guide plate 21 from the light exit surface 210.

The white LEDs 231 each includes one LED chip and a transparent cover covering on the LED chip. The LED chip may be a blue LED chip or a green LED chip. A layer of fluorescence material is disposed between the transparent cover and the LED chip or directly formed on the transparent cover, so that a white light can be emitted from the LED chip. For example, a blue LED chip and a yellow phosphor are adopted to generate white light. Alternatively, the white LEDs 231 each may include more than one LED chips and a transparent cover covering the LED chips. For instance, the white LEDs 231 each includes three LED chips consisting of a red LED chip, a green LED chip and a blue LED chip. The lights emitted by the three LED chips can be mixed together to obtain a white light and there is no need to dispose a fluorescence material in the LEDs 231. Further, the LEDs 231 of the linear light source are not limited to the white LEDs 231, which may include one or more monochromatic light LED chips such as orange LED chips, yellow LED chips, purple LED chips, or etc.

The reflecting plate 25 is disposed on the bottom surface 212 of the light guide plate 21 to reflect the lights incident thereon, and the lights are spread out via the light exit surface 210 of the light guide plate 21 effectively, which ehance light utilization efficiency of the light emitting module 20. A reflecting layer (not shown) is formed on an outer surface of the reflecting plate 25. The reflecting layer is made of reflective materials, such as metal, white printing ink and etc. A side of the reflecting plate 25 is larger than that of the light guide plate 21. More specifically, a right side edge of the reflecting plate 25 is protruded out of the right side surface 214 of the light guide plate 21, and located under the white LEDs 231. It is well know that a radiation angle of each of the white LEDs 231 is usually about 120°, which induces a lowest peripheral portion of the lights emitted from the white LEDs 231 to irradiate downwardly towards the right side edge of the reflecting plate 25. The lowest peripheral portion of the lights can be reflected by the right side edge of the reflecting plate 25, thus to maximize the light utilization efficiency of the light emitting module 20. Alternatively, the reflecting plate 25 can be omitted, and a reflecting layer can be coated on the bottom surface 212 of the light guide plate 21 to replace the reflecting plate 25 of the preferred embodiment. A thickness of the reflecting layer of the light guide plate 21 is preferably to be no more than 2 centimeters, so that the light guide plate 21 can be configured to have a thin configuration. Therefore, the light guide plate 21 is able to achieve high performance in light distribution while maintaining a compact size and low cost.

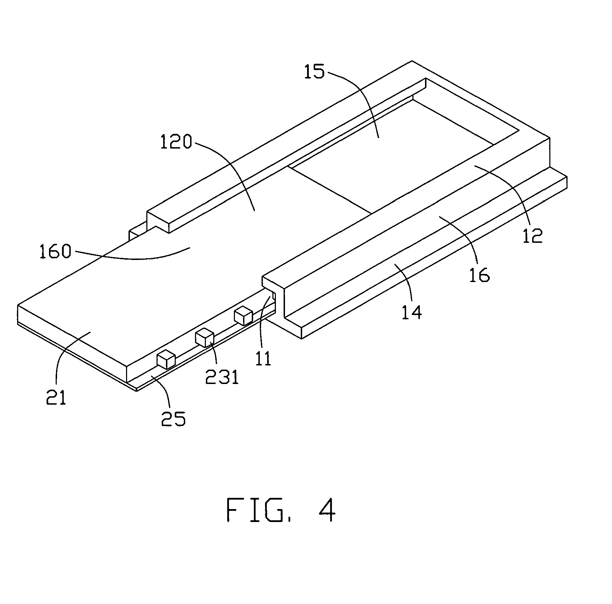

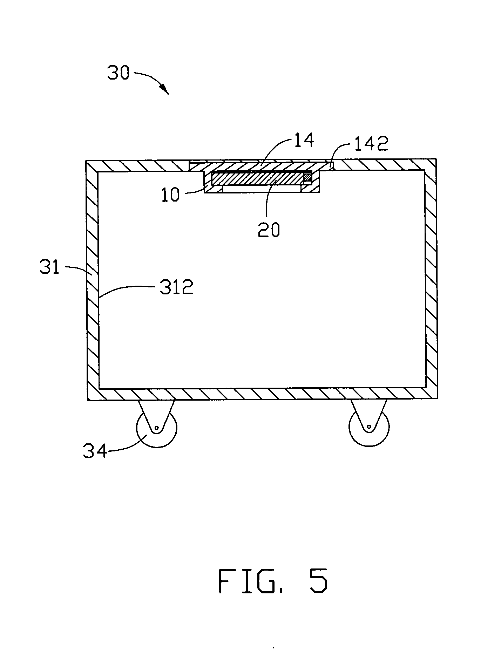

The white LEDs 231 are used in the light emitting module 20 due to advantages of high brightness, high luminous efficiency, good light quality, power consumption and long life-span. Referring to FIG. 4, when assembled, the light emitting module 20 is inserted into the mounting housing 10 through the opening 160, and moves along the slots 11 of mounting housing 10 towards the other end opposite to the opening 160 of the side plate 16. The light exit surface 210 and the bottom surface 212 of the light guide plate 21 come into contact with the top plate 12 and the mounting plate 14 of the mounting housing 10, respectively. The white LEDs 231 located on the right side of the light emitting module 20 are received in the guiding channel 11 which is located on the right side of the mounting housing 10 correspondingly. Accordingly, the illumination device has a simple structure and easy assembly. Also, the illumination device can be easily disassembled from the opening 160 without damaging the light emitting module 20 and/or the mounting housing 10. Furthermore, it is also convenient to replace or repair the damaged individual components, i.e. the light emitting module 20 and the mounting housing 10, of the illumination device. Thus, decreases usage cost of the present illumination device. In addition, the illumination device can be easily installed to a supporter, such as a car 30. Referring to FIG. 5, the car 30 includes a compartment 31 having an interior wall 312 and a plurality of wheels 34 supporting the compartment 31 thereon. The mounting plate 14 of the mounting housing 10 of the illumination device is fixedly mounted on the interior wall 312 of the compartment 31 by the two elongated flanges 142. The roughened light exit surface 210 helps the light guide plate 21 guide the lights of the light emitting module 20 to be uniformly distributed over the light exit surface 210. The lights of the light emitting module 20 are further guided out of the illumination device through the gap 120 of the mounting housing 10 to illuminate the interior of the compartment 31.

Alternatively, an end cap (not shown) for blocking the opening 160 of the mounting housing 10 can be added in the illumination device. After assembling the light emitting module 20 to the mounting housing 10, the end cap is fixed on the opening 160 of the mounting housing 10 to prevent the light emitting module 20 from being disassembled from the opening 160 of the mounting housing 10.

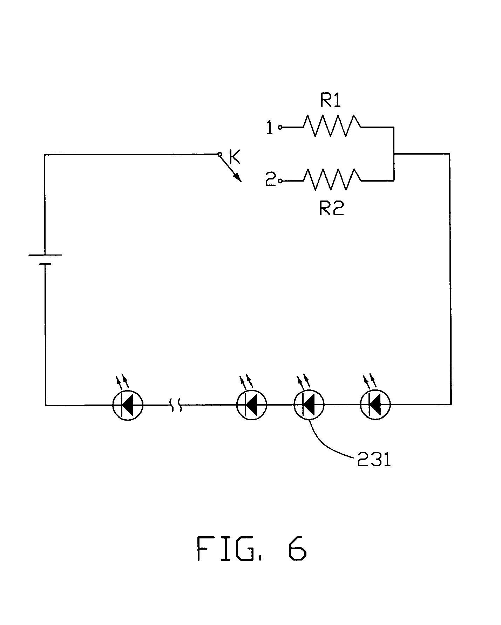

Referring to FIG. 6, a schematic diagram circuit applied in the illumination device is provided. In the circuit, the white LEDs 231 are electrically connected in series. The circuit includes a bidirectional switch K which has a first and a second electrical junctures 1, 2 and two parallel connected resistors R1, R2 respectively connected with the first and second electrical junctures 1, 2. The resistor R1 has a larger resistance than the resistor R2. The bidirectional switch K can be alternatively set to connect with the first electrical juncture 1 to form a first current loop or to connect with the second electrical juncture 2 to form a second current loop. Since the resistor R2 has a smaller resistance than the resistor R1, an electrical current flowing through the white LEDs 231 in the second current loop is larger than that in the first current loop. Accordingly, a luminance of the illumination device of the second current loop is brighter than that of the first current loop. The luminance of the illumination device can be changed by connecting the bidirectional switch K with the first electrical juncture 1 or the second electrical juncture 2 alternatively.

The working principle of the circuit will hereinafter be explained in detail. For example, the car 30 is used as the application of the illumination device. The illumination device is fixed inside of the car 30. As previously stated, the luminance of the illumination device can be changed according to usage requirements of the car 30. More specifically, when the car 30 is moving, the bidirectional switch K can be set manually to connect with the first electrical juncture 1, such that the luminance of the illumination device is adequate enough for passengers to relax such as reading in the car 30. When the car 30 is stopped, the bidirectional switch K can be set to connect with the second electrical juncture 2, such that the luminance of the illumination device is brighter and allows the pathway inside the car 30 to be clearly visible for the passengers to get on/off the car 30. When light is not required, the bidirectional switch K can be set to cut off, which is beneficial for saving electricity.

It is to be understood, however, that even though numerous characteristics and advantages of the present invention have been set forth in the foregoing description, together with details of the structure and function of the embodiments, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. An illumination device comprising:
a light emitting module comprising a light guide plate, wherein the light guide plate has a light exit surface and a light source optically coupled to the light guide plate; and
a mounting housing comprising a top plate, a mounting plate opposite to the top plate and a peripheral side plate interconnected between the top plate and the mounting plate, wherein the top plate, the mounting plate and the side plate cooperatively define a receiving space for receiving the light emitting module therein, wherein a gap is defined in the top plate above the light emitting module and an opening is defined in one end of the side plate for allowing the light emitting module to insert into the receiving space.

2. An illumination device as claimed in claim 1, wherein two elongated flanges are formed on opposite sides of the mounting housing and extend outwardly from the two opposite sides of the mounting plate and protrude from opposite sides of the side plate respectively.

3. An illumination device as claimed in claim 1 or 2, wherein the light emitting module comprises a reflecting layer located on an opposite side of the light guide plate to the light exit surface thereof.

4. An illumination device as claimed in claim 3, wherein the light source is located at a side of the light guide plate, wherein the light guide plate and the light source are disposed over the reflecting layer.

5. An illumination device as claimed in any preceding claim wherein the light guide plate is made of flexible and transparent materials.

6. An illumination device as claimed in any preceding claim wherein at least one portion of the light exit surface of the light guide plate is roughened.

7. An illumination device as claimed in any preceding claim wherein the light source is a linear light source.

8. An illumination device as claimed in claim 7 wherein the light source comprises a plurality of light emitting diodes linearly arranged at a side of the light guide plate to form the linear light source.

9. An illumination device as claimed in any preceding claim further comprising a circuit, wherein the circuit comprises a bidirectional switch and two resistors electrically connected in parallel, wherein the two resistors have different resistance for selectively and electrically connecting to the light source of the light emitting module.

10. An illumination device comprising:
a mounting housing including a top plate, a mounting plate opposite to the top plate and a plurality of side plates interconnected between the top plate and the mounting plate, wherein a receiving space is defined between the top plate and the mounting plate and is surrounded by the side plates, wherein a gap is defined in a central portion of the top plate and first and second slots are defined between the top plate and the mounting plate and respectively located at two opposite sides of the gap, wherein an opening is defined in one of the side plates; and
a light emitting module detachably mounted to the mounting housing via said opening and slidably inserted into the receiving space along said slots.

11. An illumination device as claimed in claim 10, wherein the light emitting module includes a light guide plate corresponding to the gap of the mounting housing and a plurality of LEDs located at one side of the light guide plate and received in one of the slots.

12. A car comprising:
a compartment having an interior wall;
a plurality of wheels supporting the compartment thereon;
an illuminating device comprising
a light guide plate having a light exit surface and a light incident surface adjoining the light exit surface, and
a light source optically coupled to the light incident surface of the light guide plate; and
a mounting housing comprising a mounting plate mounted on the interior wall of the compartment and first and second side walls extending from the mounting plate, wherein each of the first and second side walls has a slot defined therein and opposite ends of the light guide plate are engaged in the slots of the mounting housing, wherein the light source is received in the slot of the first side wall; and
a reflecting plate disposed between the light guide plate and the mounting plate, wherein the reflecting plate extends from the first side wall to the second side wall and faces an opposite side of the light guide plate to the light exit surface thereof, wherein the light exit surface is exposed and configured for emitting light to illuminate an interior of the compartment.
